## Europäisches Patentamt

## European Patent Office

## Office européen des brevets

(19)

(11) Veröffentlichungsnummer: **0 071 616**
**B1**

(12) # EUROPÄISCHE PATENTSCHRIFT

(45) Veröffentlichungstag der Patentschrift:
**16.10.85**

(21) Anmeldenummer: **82900352.4**

(22) Anmeldetag: **10.02.82**

(86) Internationale Anmeldenummer:
**PCT/DE 82/00026**

(87) Internationale Veröffentlichungsnummer:
**WO 82/02694 (19.08.82** Gazette **82/20)**

(51) Int. Cl.⁴: **B 64 C 11/18,** B 63 H 1/26

(54) **Auftriebselement insbesondere für Tragflügel und Schaufeln von Strömungsmaschinen, wie z.B. Luftschrauben und Schiffspropeller.**

(30) Priorität: **13.02.81 DE 3105183**

(43) Veröffentlichungstag der Anmeldung:
**16.02.83 Patentblatt 83/7**

(45) Bekanntmachung des Hinweises auf die Patenterteilung:
**16.10.85 Patentblatt 85/42**

(84) Benannte Vertragsstaaten:
**AT BE CH FR GB LI NL SE**

(56) Entgegenhaltungen:
**DE - A - 451 027**
**FR - A - 820 826**
**GB - A - 388 827**
**US - A - 1 779 026**
**US - A - 3 606 579**

(73) Patentinhaber: **SPRANGER, Günther, Wagnerstrasse 2, D-2000 Hamburg 76 (DE)**

(72) Erfinder: **SPRANGER, Günther, Wagnerstrasse 2, D-2000 Hamburg 76 (DE)**

(74) Vertreter: **Schmidt-Bogatzky, Jürgen, Dr. Ing., Schlossmühlendamm 4, D-2100 Hamburg 90 (DE)**

## Beschreibung

Die Erfindung betrifft ein Auftriebselement, insbesondere für Tragflügel und Schaufeln von Strömungsmaschinen, wie z.B. Luftschrauben und Schiffspropeller, an dessen Flügeloberseite eine oder mehrere Schaufeln derart angeordnet sind, dass zwischen Flügeln und Schaufeln bzw. zwischen den Schaufeln ein Spalt gebildet ist, wobei die Profilsehne einer jeden Schaufel zur Profilsehne des Flügels vom Fuss der Schaufel bis zu deren Rand annähernd parallel angeordnet ist.

Bei der Umströmung von gattungsgemässen Auftriebselementen Luft oder einem anderen gasförmigen Fluid besteht das Problem, dass eine Strömung mit geringem Widerstand nur dann erzielt werden kann, wenn im Bereich des Profils des Flügels Wirbelbildungen vermieden oder aber doch minimiert werden, da Strömungswirbel den Strömungswiderstand des Flügels erheblich erhöhen. Bei Tragflügeln besteht das Problem, dass die im Anströmbereich des Profils vorhandene laminare Grenzschicht über die Profiltiefe von einer laminaren in eine turbulente Strömung umschlägt, so dass sich im hinteren Bereich des Tragflügelprofils ein Wirbelgebiet ausbildet. Darüberhinaus entstehen am Rand des Tragflügels durch Druckdifferenz der Strömung an der Flügeloberseite und -unterseite Randwirbel, die sich zu einem Wirbelzopf schrägabwärts aufrollen. Um diese Eigenschaften in ihren Auswirkungen zu begrenzen, ist bereits vorgeschlagen worden, an der Flügelvorderkante und/oder der Flügelhinterkante besondere Klappen anzuordnen, mittels derer durch Induktionswirkung der an der Profiloberseite befindlichen Strömung Energie zugeführt wird. Durch diese Energiezufuhr kann der Ablösepunkt der Strömung zwar zur Flügelhinterkante verschoben, nicht aber beseitigt werden. Ein besonderer Nachteil dieser Klappe besteht darin, dass bei deren Ausfahren die Gleitzahl des Tragflügelprofils zum Teil erheblich beeinträchtigt wird. Zur Vermeidung der Randwirbel ist es ferner bekannt, an den Flügelenden vertikale Hilfsflügel vorzusehen, die zwar die Wirbelbildung vermindern, dafür aber den Strömungswiderstand erhöhen. Um die Strömungsverluste bei Schaufeln zu minimieren, die aus Ablösungs- und Verwirbelungsverlusten bestehen, ist es bekannt, die Schaufeln über ihre Länge zu verwinden, um einen Abriss der Strömung von der Schaufel und damit turbulente Wirbelbildung durch einen schiefen Einfall Strömung bereits im vorderen Bereich des Profils zu verhindern. Im hinteren Bereich sowie am freien Endabschnitt der Schaufel treten dagegen Turbulenzen wie beim Tragflügel auf, deren Grösse u.a. von der Anströmgeschwindigkeit der Strömung abhängt. Es ist deshalb bereits vorgeschlagen worden, Schaufeln im Bereich des Schaufelfusses drehbar zu lagern, um Strömungsabrissen auch durch Variation des Anstellwinkels begegnen zu können. Dieses erfordert jedoch einen hohen konstruktiven, fertigungstechnischen und regeltechnischen Aufwand und erhöht die Störanfälligkeit einer mit derartigen Schaufeln ausgestatteten Strömungsmaschine.

Für Luftschrauben ist durch die DE-C-451 027 bereits eine Ausbildung gemäss dem Oberbegriff des Anspruchs 1 vorgeschlagen worden. Bei dieser Luftschraube besteht jedoch der Nachteil, dass durch die einzelnen Schaufeln ein Flügelprofil von relativ grosser Völligkeit entsteht, was für grössere Anströmgeschwindigkeiten aerodynamisch ungeeignet ist. Darüberhinaus weisen die zwischen den Schaufeln ausgebildeten düsenförmigen Spalte über die Schaufellängen einen annähernd gleich grossen Querschnitt auf. Wegen der über die Flügellänge unterschiedlichen Anströmgeschwindigkeiten ist daher eine aerodynamisch optimale Auslegung der Spaltgrösse nicht möglich.

Die Aufgabe der Erfindung besteht darin, ein Auftriebselement gemäss dem Oberbegriff des Anspruchs 1 zu schaffen, das es ermöglicht, ohne Verwendung besonderer Klappen die Umströmung von Profilen von Flügeln so zu beeinflussen, dass der Ablösepunkt der laminaren Strömung über die Flügellänge gleichmässig zur Flügelhinterkante verschoben wird.

Erfindungsgemäss erfolgt die Lösung der Aufgabe dadurch, dass die Schaufel bzw. Schaufeln an der Wurzel des Flügels in dessen Profil integriert und über dessen Länge gleichmässig derart verbunden sind, dass sich der Abstand zwischen Schaufeln und Flügel und gegebenenfalls den Schaufeln zu einem Spalt maximaler Breite am Rand des Flügels erweitert und das Profilskelett der Schaufel an der Wurzel des Flügels eine maximale Wölbung aufweist und am freien Rand gestreckt ist.

Weitere Merkmale der Erfindung werden in den Unteransprüchen beschrieben. Anhand der in den Zeichnungen dargestellten Auftriebselemente werden diese und deren Funktion näher erläutert. Es zeigt

Fig. 1 ein Auftriebselement in einer Seitenansicht

Fig. 2 das Auftriebselement nach Fig. 1 in einer anderen Seitenansicht

Fig. 3 ein Auftriebselement mit einer Schaufel nach Fig. 1 in einer Seitenansicht

Fig. 4 das Auftriebselement nach Fig. 3 in einer anderen Seitenansicht

Fig. 5 das Auftriebselement nach Fig. 3 in einer Ansicht von hinten

Fig. 6a Draufsichten auf das Auftriebselement in horizontalen bis 6c Schnittebenen 1–1, 2–2, 3–3 nach Fig. 4

Fig. 7 eine schematische Darstellung der erfindungsgemässen Strömungsregulierung

Fig. 8a ein Auftriebselement mit zwei Schaufeln in einer und 8b Seitenansicht und einer Queransicht

Fig. 9a Draufsicht auf das Auftriebselement nach Fig. 8a in bis 9c horizontalen Schnittebenen A–A, B–B, C–C,

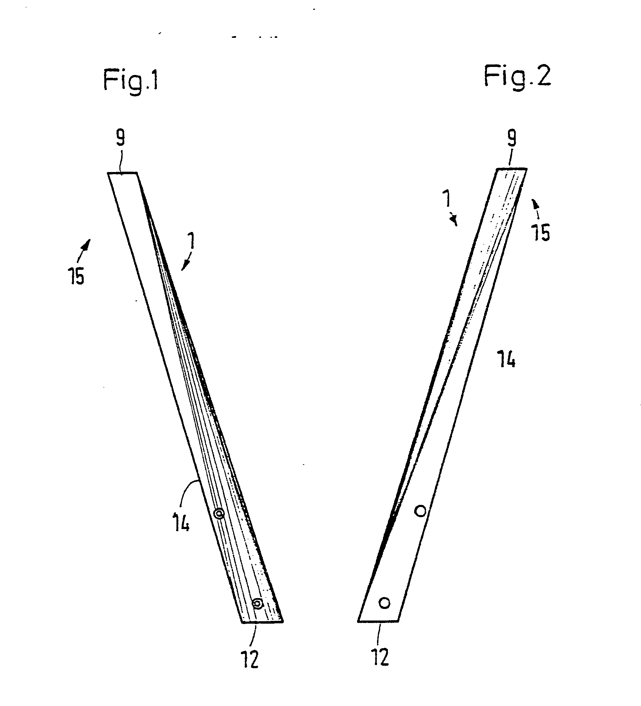

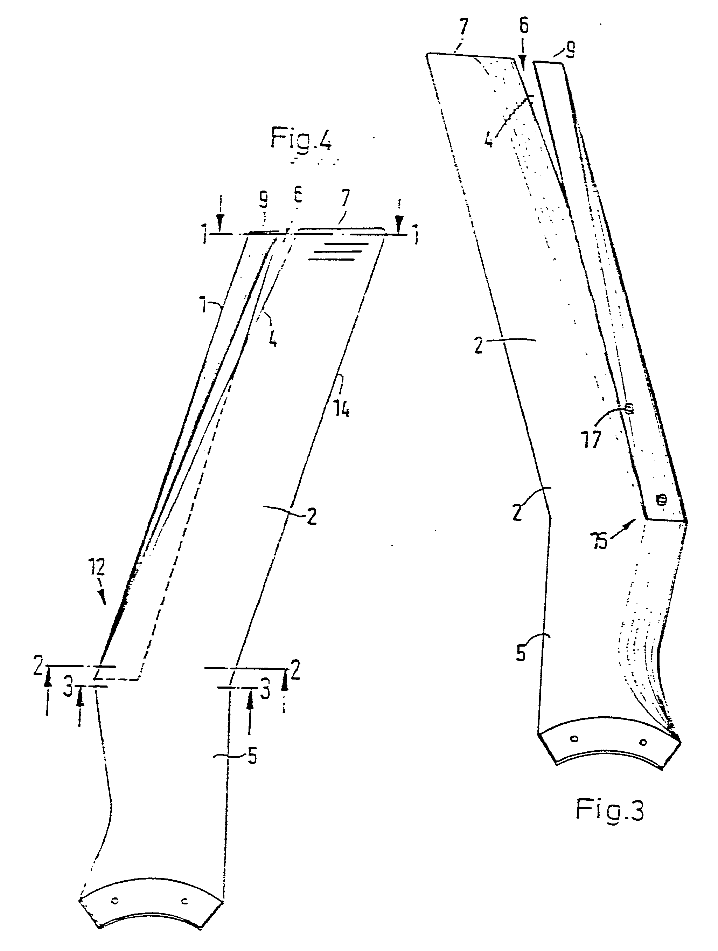

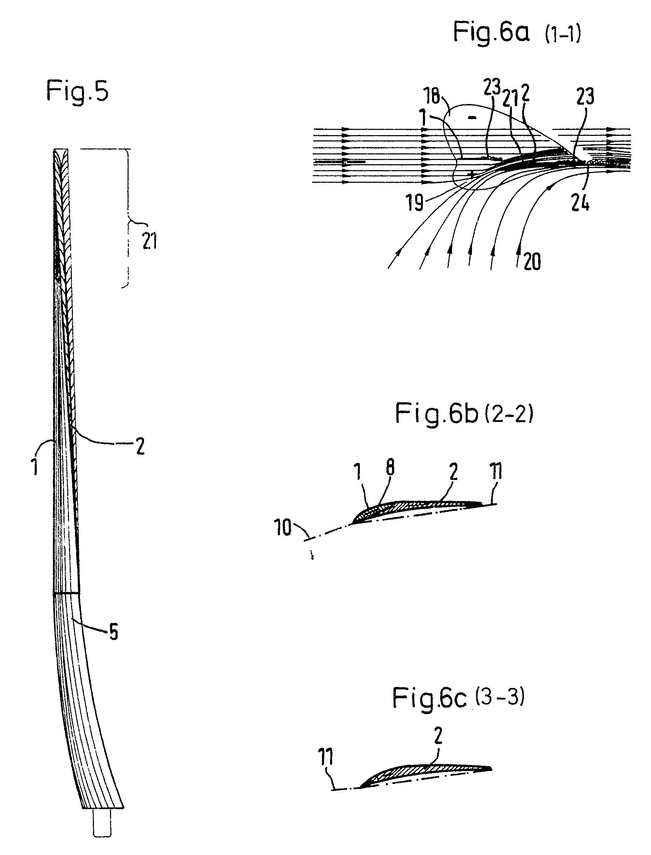

Die Schaufel 1 ist als Blatt ausgebildet, das über seine Länge verwunden ist (Fig. 1 und 2). Sie wird, wie in Fig. 3 bis 5 dargestellt, an der Flügeloberseite 3 im Bereich der Flügelvorderkante 4 angeordnet. Die Schaufel 1 ist hierbei derart zur Flügelvorderkante 4 winklig vorgepfeilt, dass die Hinterkante 14 der Schaufel im Bereich von deren freiem Endabschnitt 15 in Strömungsrichtung vor der Flügelvorderkante 4 befindlich ist. Durch die gleichmässige Verwindung der Schaufel 1 über deren Gesamtlänge erweitert sich somit der Abstand zwischen der Schaufel 1 und dem Flügel 2 zu einem Spalt 6 maximaler Breite am Rand 7 des Flügels 2. An der Wurzel 5 des Flügels 2 weist das Profilskelett 8 der Schaufel 1 eine maximale Wölbung auf, während es an dem freien Rand gestreckt ist. Die Profilsehne 10 der Schaufel 1 ist ferner zur Profilsehne 11 des Flügels 2 am Fuss 12 der Schaufel 1 in einem negativen Winkel und am Rand der Schaufel 1 in einem positiven Winkel ausgerichtet (Fig. 6a–c).

Der Fuss 12 der Schaufel 1 ist in einer Ausnehmung 16 des Flügels 2 gelagert und dort mittels Schraubenverbindungen 17 befestigt. Die Ausnehmung 16 ist so ausgebildet, dass eine strömungsgünstige Einlagerung des Fusses 12 der Schaufel 1 möglich ist. Es besteht auch die Möglichkeit, die Schaufel 1 in der Ausnehmung 16 einstellbar mittels einer Stelleinrichtung schwenkbar zu lagern. Hierdurch ist es möglich, die Stellung der Schaufel 1 unterschiedlichen Betriebsverhältnissen anzupassen. Darüberhinaus können auch an dem Flügel 2 mehrere in Anströmrichtung X vorgepfeilte Schaufeln 1 vorgesehen werden, um eine weitere Schubverstärkung des Flügels 2 zu erreichen.

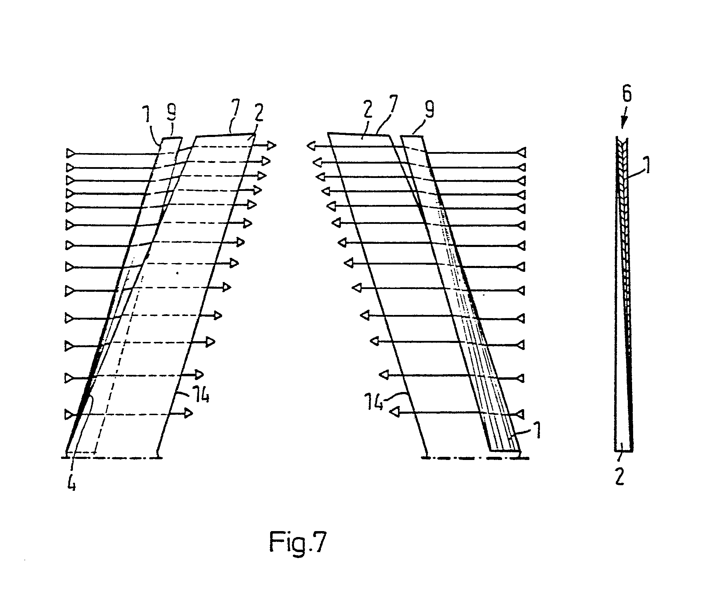

Durch Verwendung der Schaufel 1 wird an dem Flügel 2 je eine zur Flügelvorderkante 4 vorgezogene Unterdruckzone 18 und Überdruckzone 19 ausgebildet. Die Überdruckzone 19 entsteht an der Unterseite der Schaufel 1 und bewirkt einen Druckausgleich durch den Spalt 6 mittels abfliessender Strömung. Diese Druckausgleichsströmung induziert eine weitere Gaszuströmung aus der Druckzone 20 unterhalb des Flügels 2, die dem anströmenden Gas zugemischt ist. Das an der Oberseite des Flügels strömende Gas wird durch Druckausgleich so gerichtet, dass die Geschwindigkeit des an der Flügelhinterkante abströmenden Gases pber die Flügellänge gleich ist und der Ablösungspunkt der Strömung zur Flügelhinterkante verschoben wird (Fig. 7). Ferner wird in Richtung des Randes 7 der Druck des die Flügeloberseite überströmenden Gases erhöht. Dieses wiederum bewirkt eine Verminderung des Druckgefälles am Rand 7 und damit die Ausbildung verkleinerter Wirbelzöpfe 24, wodurch der induzierte Widerstand an dem Gesamtprofil sinkt. Im Bereich des Randes 9 entsteht ein Gebiet erhöhter Strömungsgeschwindigkeit 21, wodurch der Ablösungspunkt in der turbulenten Grenzschicht über das Profil des Flügels 2 hinausgeschoben wird. Gleichzeitig wird das Wirbelfeld 23 an dem hinteren Flügelbereich verkleinert.

Durch die Ausbildung der Schaufel 1 und deren Anordnung am Flügel 2 ist es somit möglich, durch Energiezufuhr die an der Flügeloberseite befindliche Gasströmung zu verdichten und den Bereich der laminaren Strömung sowie die Wirbelfelder zu verkleinern, so dass im Ergebnis der erzielbare Schub vergrössert wird.

Es ist auch möglich, einen oder mehrere erfindungsgemässe Schaufeln an einem Flügel 2 anzuordnen, der in an sich bekannter Weise des Anstellwinkels am Fuss oder der Wurzel des Flügels 2 verdrehbar ist. Hierdurch ist es möglich, die durch die Anpassung des Anstellwinkels an die Ideal-Anströmung bewirkte Leistungserhöhung des Profils des Flügels 2 noch weiter zu vergrössern, da auch in diesem Fall der oder die Schaufeln die Umströmung des Profils des Flügels 2 durch Minimierung der Wirbelbildung verbessern. Durch die individuelle Verstellmöglichkeit einer jeden Schaufel kann dann auch bei bezüglich des Anstellwinkels variierbaren Flügeln 2 die Umströmung des Profils weiter optimiert werden.

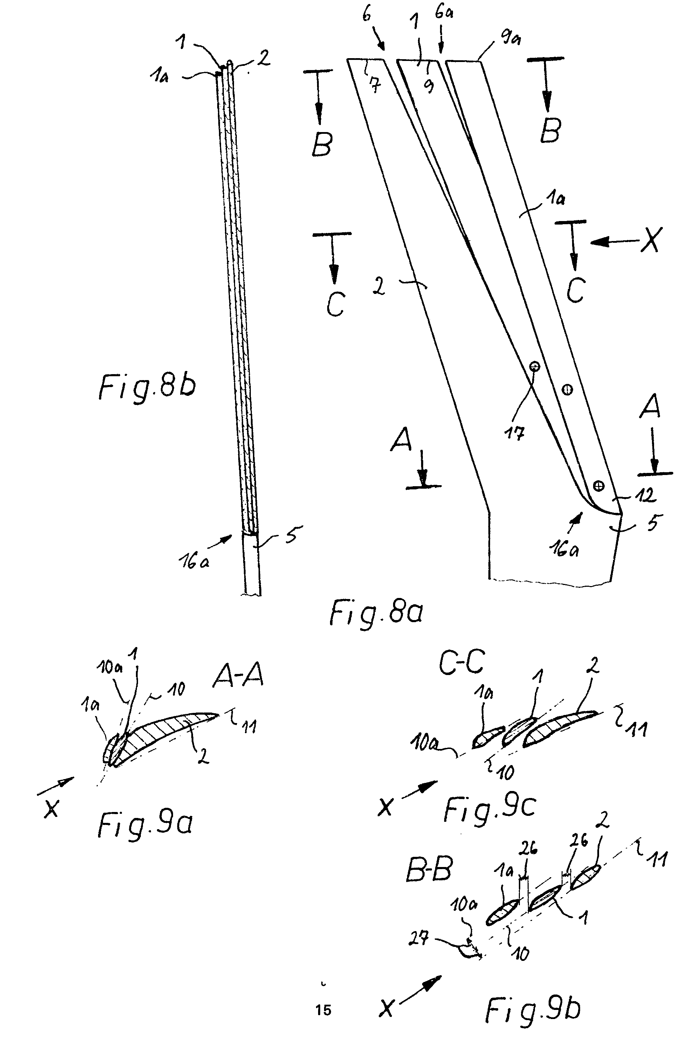

In Fig. 8a und 8b ist ein Flügel 2 dargestellt, der mit zwei Schaufeln 1, 1a verbunden ist. Die Schaufeln 1, 1a sind in einer Ausnehmung 16a an der Wurzel 5 des Flügels 2 befestigt. Sie sind so angeordnet, dass sie in Bezug auf die Flügelvorderkante 4 vorgestreckt sind. Darüberhinaus sind die Ränder 9, 9a der Schaufeln 1, 1a gegenüber dem Rand 7 des Flügels 2 in Richtung Profiloberseite angehoben. Hierdurch werden zwischen den Schaufeln 1, 1a und dem Flügel 2 in Anströmrichtung X freie Strömungsquerschnitte 27 und senkrecht zur Anströmrichtung X Druckaustauschquerschnitte 26 ausgebildet. Wie in den Fig. 9a bis 9c dargestellt, sind die Flügel 2 und Schaufeln 1, 1a ebenfalls gewölbt ausgebildet. Die Wölbung weist im Bereich der Wurzel 5 ein Maximum auf, während die Querschnitte der Schaufeln 1, 1a und des Flügels 2 an den Rändern 9, 9a, 7 gestreckt sind. Die Schaufeln 1, 1a sind in diesem Bereich nahezu symmetrisch ausgebildet. Während die Profilsehnen 10, 10a der Schaufeln 1, 1a an dem Fuss 12 in einem sich zur Flügeloberseite 3 in Anströmrichtung X öffnenden Winkel zur Profilsehne 11 des Flügels 2 angeordnet sind, befinden sich die Profilsehnen 10, 10a der Schaufeln 1, 1a im Bereich der Ränder 9, 9a aufgrund der verminderten Profilverwölbung etwa parallel zur Profilsehne 11 des Flügels. Diese in den Fig. 8 und 9a bis 9c dargestellte Anordnung von Schaufeln 1, 1a an einem Flügel 2 ermöglicht eine besonders hohe Leistungssteigerung.

Es ist auch möglich, die beschriebenen Schaufeln 1, 1a zur Leistungsvergrösserung von Schiffspropellern zu verwenden. Hierbei werden jedem Propellerblatt eine Schaufel 1 oder aber mehrere Schaufeln 1, 1a zugeordnet. Jede Schaufel 1, 1a kann allgemein entsprechend der Vorderkante des zugehörigen Propellerblattes gekrümmt sein. Durch die Verwendung von Schaufeln 1, 1a wird bei Schiffspropellern die Kavitationsgefahr erheblich vermindert, da am Propeller randseitig kritische Unterdrücke vermieden werden. Ebenso ist es möglich, die Schaufeln 1, 1a zur Leistungssteigerung von Luftschrauben zu verwenden. Hierbei werden ebenfalls jedem Luftschraubenblatt ein oder mehrere Schauflen 1, 1a

zugeordnet. Die bei Luftschrauben am Randabschnitt bestehenden Probleme durch das Auftreten von örtlichen Schallgeschwindigkeiten werden durch Verwendung von Schaufeln1, 1a verringert.

## Patentansprüche

1. Auftriebselement, insbesondere für Tragflügel und Schaufeln von Strömungsmaschinen, wie z.B. Luftschrauben und Schiffspropeller, an dessen Flügeloberseite eine oder mehrere Schaufeln (1, 1a) derart angeordnet sind, dass zwischen Flügel (2) und Schaufel bzw. zwischen den Schaufeln ein Spalt (6, 6a) gebildet ist, wobei die Profilsehne (10, 10a) einer jeden Schaufel zur Profilsehne (11) des Flügels vom Fuss (12) der Schaufel bis zu deren Rand (9) annähernd parallel angeordnet ist, dadurch gekennzeichnet, dass die Schaufel (1) bzw. Schaufeln, (1, 1a) an der Wurzel (5) des Flügels (2) in dessen Profil integriert und über dessen Länge gleichmässig derart verwunden sind, dass sich der Abstand zwischen Schaufel (1) und Flügel (2) und ggf. den Schaufeln (1, 1a) zu einem Spalt (6, 6a) maximaler Breite am Rand (7) des Flügels (4) erweitert und das Profilskelett (8) der Schaufel (1, 1a) an der Wurzel (5) des Flügels (2) eine maximale Wölbung aufweist und am freien Rand (9) gestreckt ist.

2. Auftriebselement nach Anspruch 1, dadurch gekennzeichnet, dass die Hinterkante (14) der Schaufel (1, 1a) in einem sich von dem Fuss (12) zum Rand (9) erweiternden Abstand zur Flügelvorderkante (4) angeordnet ist.

3. Auftriebselement nach Anspruch 1 und 2, dadurch gekennzeichnet, dass die Schaufel (1, 1a) zur Flügelvorderkante (4) winklig derart vorgepfeilt angeordnet ist, dass die Hinterkante (14) fer Schaufel (1, 1a) im Bereich von dessen freiem Endabschnitt (15) in Strömungsrichtung vor der Flügelvorderkante (4) angeordnet ist.

4. Auftriebselement nach Anspruch 1 bis 3 dadurch gekennzeichnet, dass der Rand (9) der Schaufel (1, 1a) dem Rand (7) des Flügels (2) zugeordnet ist.

5. Auftriebslelement nach Anspruch 1 bis 4, dadurch gekennzeichnet, dass der Fuss (12) der Schaufel (1, 1a) in einer Ausnehmung (16) des Flügels (2) angeordnet und befestigt ist.

6. Auftriebselement nach Anspruch 5, dadurch gekennzeichnet, dass die Schaufel (1, 1a) in der Ausnehmung (16) mittels einer Stelleinrichtung schwenkbar angeordnet ist.

7. Auftriebselement nach Anspruch 1 bis 6, dadurch gekennzeichnet, dass jede der in Anströmrichtung vorgepfeilten Schaufeln (1, 1a) an einem Flügel (2) angeordnet sind, der in an sich bekannter Weise mittels einer Stelleinrichtung zur Variation des Ausgellwinkels am Fuss oder der Wurzel des Flügels (2) verdrehbar ist.

8. Auftriebselement nach Anspruch 1 bis 7, dadurch gekennzeichnet, dass die Profilsehne (10, 10a) der Schaufel (1, 1a) zur Profilsehne (11) des Flügels (2) am Fuss (12) der Schaufel (1, 1a) in einem sich zur Flügeloberseite (3) in Anströmrichtung X öffnenden Winkel und am Rand der Schaufel (1, 1a) in einem entgegengesetzt zur Anströmrichtung X öffnenden Winkel ausgerichtet ist.

9. Auftriebselement nach Anspruch 1 bis 8, dadurch gekennzeichnet, dass die Schaufeln (1, 1a) und der Flügel (2) im Bereich der den Rändern (9, 7) zugewandten Endabschnitte zueinander in einer Ebene fluchtend angeordnet sind.

10 Auftriebselement nach Anspruch 2 bis 10, dadurch gekennzeichnet, dass die Schaufel (1, 1a) inbezug auf die Flügelvordekante (4) vorgestreckt und deren Ränder (9, 9a) zum Rand (7) des Flügels (2) in Richtung Profiloberseite angehoben sind.

## Revendications

1. Elément de sustentation, notamment pour aile portante et pour des pales de turbo-machines, telles par exemple que des hélices aériennes et des hélices de navires, élément contre la face supérieure d'aile duquel sont disposées une ou plusieurs ailettes (1, 1a) de façon qu'entre l'aile (2) et l'ailette ou bien entre les ailettes, un intervalle (6, 6a) soit ménagé, la corde (10, 10a) du profil de chacune des ailettes étant approximativement parallèle à la corde (11) du profil de l'aile depuis le pied (12) de l'ailette jusqu'à son bord (9), élément caractérisé en ce que l'ailette (1) ou bien les ailettes (1, 1a) sont intégrées dans le profil de l'aile (2) à la racine (5) de celle-ci, et sont gauchies régulièrement sur la longueur de l'aile de façon que l'intervalle entre l'ailette (1) et l'aile (2) et éventuellement entre les ailettes (1, 1a) s'élargisse en un intervalle (6, 6a) de largeur maximale au bord (7) de l'aile (4), l'ossature (8) de l'ailette (1, 1a) présentant une courbure maximale à la racine (5) de l'aile (2) et étant aplatie au bord libre de l'ailette (9).

2. Elément de sustentation selon la revendication 1, caractérisé en ce que le bord arrière (14) de l'ailette (1, 1a) est disposé à une distance du bord antérieur (4) de l'aile allant croissant depuis le pied (12) de l'ailette jusqu'à son bord (9).

3. Elément de sustentation selon revendications 1 et 2, caractérisé en ce que l'ailette (1, 1a), en flèche vers l'avant, est disposée angulairement par rapport au bord antérieur (4) de l'aile de sorte que le bord arrière (14) de l'ailette (1, 1a), au voisinage de l'extrémité libre (15) de celle-ci, est disposé en avant du bord antérieur de l'aile (4) selon le sens de l'écoulement.

4. Elément de sustentation selon revendications 1 à 3, caractérisé en ce que le bord (9) de l'ailette (1, 1a) est associé au bord (7) de l'aile (2).

5. Elément de sustentation selon revendication 1 à 4, caractérisé en ce que le pied (12) de l'ailette (1, 1a) est disposé dans un évidement (16) de l'aile (2) et y est fixé.

6. Elément de sustentation selon la revendication 5, caractérisé en ce que l'ailette (1, 1a) est disposée dans l'évidement (16) au moyen d'un dispositif de réglage, de façon à pouvoir pivoter.

7. Elément de sustentation selon revendication 1 à 6, caractérisé en ce que chacune des ailettes (1, 1a), en flèche dans la direction d'arrivée de l'écoulement, est disposée sur une aile (2) qui, d'une manière en soi connue, peut, grâce à un dispositif de réglage, tourner sur son pied ou sur sa racine pour faire varier l'angle d'attaque.

8. Elément de sustentation selon revendication 1 à 7, caractérisé en ce que, par rapport à la corde (11) du profil de l'aile (2), la corde (10, 10a) du profil de l'ailette (1, 1a) est orientée au pied (12) de l'ailette (1, 1a) selon un angle s'ouvrant, par rapport à la face supérieure (3) de l'aile, dans la direction X d'arrivée de l'écoulement, tandis qu'elle est orientée au bord de l'ailette (1, 1a) selon un angle s'ouvrant dans la direction opposée.

9. Elément de sustentation selon revendication 1 à 8, caractérisé en ce que les ailettes (1, 1a) et l'aile (2), dans la zone de leurs segments d'extrémités tournée vers les bords (9, 7) sont disposées les unes par rapport aux autres en étant alignées dans un plan.

10. Elément de sustentation selon revendication 2 à 10, caractérisé en ce que les ailettes (1, 1a) sont étirées vers l'avant par rapport au bord antérieur (4) de l'aile, tandis que leurs bords (9, 9a) sont soulevés en direction de la face supérieure du profil par rapport au bord (7) de l'aile (2).

**Claims**

1. Lift member, particularly for wings and blades of fluid flow engines, such as e.g. propellers for aircraft and ships, one or more blades (1, 1a) being arranged on the top of the wing, a gap (6, 6a) being formed between the wing (2) and the blade or between the individual blades, the chord (10, 10a) of each blade being arranged approximately parallel to the chord (11) of the wing from the blade base (12) to its edge (9), characterized in that the blade (1) or blades (1, 1a) are integrated into the profile of wing (2) at the root (5) thereof and are uniformly twisted over its length in such a way that the spacing between the blade (1) and the wing (2) and optionally the blades (1, 1a) is widened to a gap (6, 6a) of maximum width at the adge (7) of wing (4) and the profile skeleton (8) of blades (1, 1a) has a maximum curvature at root (5) of wing (2) and is extended at the free edge (9).

2. Lift member according to claim 1, characterized in that the trailing edge (14) of blade (1, 1a) is arranged at a distance form the leading edge of the wing which increases from base (12) to edge (9).

3. Lift member according to claims 1 and 2, characterized in that the blade (1, 1a) is negatively swept in angular manner with respect to the wing leading edge (4), that the trailing edge (14) of blade (1, 1a) in the vicinity of the free end portion (15) thereof is arranged upstream of the wing leading edge (4) in the flow direction.

4. Lift member according to claims 1 to 3, characterized in that edge (9) of blade (1, 1a) is associated with edge (7) of wing (2).

5. Lift member according to claims 1 to 4, characterized in that the base (12) of blade (1, 1a) is arranged and fixed in a recess (16) of wing (2).

6. Lift member according to claim 5, characterized in that the blade (1, 1a) is pivotably arranged in recess (16) by means of a setting device.

7. Lift member according to claims 1 to 6, characterized in that each of theblades (1, 1a) negatively swept in the approach flow direction is arranged on a wing (2), which can be twisted in per se known manner by means of a setting device for varying the setting angle at the wing base or root.

8. Lift member according to claims 1 to 7, characterized in that the chord (10, 10a) of blade (1, 1a) is aligned with an angle to the wing top (3) opening inthe approach flow direction (X) to the chord (11) of wing (2) at the base (12) of blade (1, 1a) and at the edge of blade (1, 1a) is aligned in an angle opening in opposition to the approach flow direction (X).

9. Lift member according to claims 1 to 8, characterized in that the blade (1, 1a) and wing (2) are aligned in one plane to one another in the vicinity of the end portions facing edges (9, 7).

10. Lift member according to claims 2 to 10, characterized in that blades (1, 1a) are shaped with respect to the leading edge (4) of the wing and the edges (9, 9a) thereof are raised with respect to edge (7) of wing (2) in the profile top direction.

Fig.1

Fig.2

Fig.4

Fig.3

Fig.5

Fig.6a (1-1)

Fig.6b (2-2)

Fig.6c (3-3)

Fig.7

Fig.8b

Fig.8a

A-A   Fig.9a

C-C   Fig.9c

B-B   Fig.9b